# EUROPEAN PATENT SPECIFICATION

(11) **EP 4 340 055 B1**
(45) Date of publication and mention of the grant of the patent: **31.12.2025**
(21) Application number: 23763679.0
(22) Date of filing: 28.02.2023
(51) Int. Cl.: H01M 4/04, B65H 20/14, B65H 27/00, B65H 23/025, H01M 4/139

(54) **AIR LIFT DEVICE AND DRYING DEVICE FOR MANUFACTURING ELECTRODE COMPRISING SAME**
LUFTKISSENVORRICHTUNG UND TROCKNUNGSVORRICHTUNG ZUR HERSTELLUNG EINER ELEKTRODE MIT EINER SOLCHEN
DISPOSITIF A COUSSIN D'AIR ET DISPOSITIF DE SÉCHAGE POUR FABRIQUER UNE ÉLECTRODE LE COMPRENANT

(30) Priority: 03.03.2022 KR 20220027114
(43) Date of publication of application: 20.03.2024
(73) Proprietor: LG Energy Solution, Ltd., Seoul 07335 (KR)
(72) Inventor: SEO, Sang Jin, Daejeon 34122 (KR); AHN, Chang Bum, Daejeon 34122 (KR); JANG, Yeong Cheol, Daejeon 34122 (KR); JUNG, Jea Bong, Daejeon 34122 (KR); KIM, Tae Yeon, Daejeon 34122 (KR); LEE, Doo Hyun, Daejeon 34122 (KR)
(74) Representative: Plasseraud IP
(86) International application number: PCT/KR2023/002757
(87) International publication number: WO 2023/167480

(56) References cited:
- JP-A- 2006 019 396
- JP-A- 2006 264 891
- JP-A- H10 228 898
- KR-A- 20220 013 672
- KR-B1- 102 095 447
- US-A- 4 292 745
- US-A- 5 452 834

## Description

### Technical Field

The present invention relates to an air lift device capable of preventing occurrence of wrinkles in an uncoated portion corresponding to an uncoated portion position and a coating pattern of a coated electrode, and a drying device for manufacturing an electrode comprising the same.

### Background Art

An electrode process among manufacturing processes of a lithium secondary battery is divided into an active material mixing process, an electrode coating process, a drying process, and a slitting process.

After the electrode coating process, the drying process of removing a solvent in a slurry using heat is performed.

Meanwhile, after performing the drying process, the coated electrode discharged from a drying part has a thermal expansion deviation between a coated portion coated with an electrode slurry (also referred to as a 'coating portion') and an uncoated portion uncoated with an electrode slurry. Such a thermal expansion deviation causes a problem of wrinkles in the travelling direction in the uncoated portion while the coated electrode travels.

In order to improve wrinkles in the uncoated region of the coated electrode, a roller physically contacting the coated electrode to smooth out wrinkles or folds has been used. However, since a separate space is required to introduce such a roller, and it is difficult to change the structure once installed, there is a problem of low processability.

Meanwhile, since the size of the coated electrode, and the arrangement pattern (coating pattern) of the coated portion and the uncoated portion change for each product model, a technique for preventing wrinkles from forming on the uncoated portion of the coated electrode in response to the changed coating pattern is required.

US5452834A relates to a turning bar for changing the direction of a running web or ribbon of paper in a printing press by selectively activating air flow port in the cylindrical wall of the turning bar.

### Disclosure

### Technical Problem

In a process of lifting a coated electrode by spraying air thereto, it is a problem to be solved by the present invention to provide an air lift device capable of differently setting spray pressures of air for each region of the coated electrode in response to a coating pattern and a position of an uncoated portion of the coated electrode, and a drying device for manufacturing an electrode comprising the same.

In addition, when lifting a coated electrode after performing a drying process, it is a problem to be solved by the present invention to provide an air lift device capable of preventing wrinkles from occurring in an uncoated portion in a travelling process by spraying air to the uncoated portion side of the coated electrode at a higher pressure than a coated portion, and a drying device for manufacturing an electrode comprising the same.

### Technical Solution

In order to solve the above problems, according to one aspect of the present invention, an air lift device for lifting a coated electrode having a coated portion coated with an electrode slurry and an uncoated portion uncoated with an electrode slurry while driving is provided, wherein the air lift device comprises a main body including a space part into which air is introduced, and a spray part through which the air in the space part is sprayed to the outside toward a coated electrode, a membrane member which is disposed in the main body to face the space part, and is extensible, and a press part provided to differently set a spray pressure of the air sprayed toward the coated portion and a spray pressure of the air sprayed toward the uncoated portion through the spray part in the space part by pressurizing a partial region of the membrane member.

The press part is provided to set the spray pressure of the air sprayed toward the uncoated portion higher than the spray pressure of the air sprayed toward the coated portion.

Also, the press part may comprise a pressurizing member contacting the membrane member and disposed to extend the region of the contacted membrane member toward the spray part, and a driving part for moving the pressurizing member within the main body so that the contact position between the pressurizing member and the membrane member is adjusted.

In addition, the pressurizing member may be disposed to contact the region of the membrane member facing the uncoated portion of the coated electrode, the membrane member may be convexly extended toward the spray part by the pressurizing member, and the region where the membrane member is convexly extended may have a spray pressure larger than that of the surrounding region.

Furthermore, the driving part may be provided to move the pressurizing member along the direction where the coated portion and the uncoated portion of the coated electrode are sequentially arranged.

Also, the air lift device may further comprise an air supply part provided to supply air into the space part, and the air supply part may comprise a regulator for adjusting a flow rate of air.

In addition, the main body may have a plurality of space parts along the direction where the coated portion and the uncoated portion of the coated electrode are sequentially arranged, and the plurality of space parts may comprise a first space part, and second and third space parts located on both sides of the first space part, respectively. At this instance, the membrane member and the press part may be individually provided in the second and third space parts.

Furthermore, the air lift device may further comprise an air supply part provided to supply air into the first to third space parts, and the air supply part may comprise a plurality of regulators for individually adjusting the flow rates of air supplied to the respective space parts.

In addition, the spray part may comprise a plurality of spray holes.

According to another aspect of the present invention, a drying device for manufacturing an electrode comprising a drying part drying a coated electrode that a coated portion coated with an electrode slurry and an uncoated portion uncoated with an electrode slurry are formed, and a transfer part moving the coated electrode passing through the drying part in the travelling direction is provided.

Also, the transfer part comprises one or more travelling rolls contacting an air lift device provided to lift the coated electrode while travelling using air, and the coated electrode, and moving the coated electrode along the travelling direction.

In addition, the air lift device comprises a main body including a space part into which air is introduced, and a spray part through which the air in the space part is sprayed to the outside toward a coated electrode, a membrane member which is disposed in the main body to face the space part, and is extensible, and a press part differently setting a spray pressure of the air sprayed toward the coated portion and a spray pressure of the air sprayed toward the uncoated portion through the spray part in the space part by pressurizing a partial region of the membrane member.

Furthermore, the air lift device may be disposed in a section where the travelling direction of the coated electrode changes.

The press part is provided to set the spray pressure of the air sprayed toward the uncoated portion higher than the spray pressure of the air sprayed toward the coated portion.

Aso, the press part may comprise a pressurizing member contacting the membrane member and disposed to extend the region of the contacted membrane member toward the spray part, and a driving part for moving the pressurizing member within the main body so that the contact position between the pressurizing member and the membrane member is adjusted.

In addition, the pressurizing member may be disposed to contact the region of the membrane member facing the uncoated portion of the coated electrode, the membrane member may be convexly extended toward the spray part by the pressurizing member, and the region where the membrane member is convexly extended may have a spray pressure larger than that of the surrounding region.

Furthermore, the driving part may be provided to move the pressurizing member along the direction where the coated portion and the uncoated portion of the coated electrode are sequentially arranged.

Also, the air lift device may further comprise an air supply part provided to supply air into the space part, and the air supply part may comprise a regulator for adjusting a flow rate of air.

In addition, the main body may have a plurality of space parts along the direction where the coated portion and the uncoated portion of the coated electrode are sequentially arranged, and the plurality of space parts may comprise a first space part, and second and third space parts located on both sides of the first space part, respectively. At this instance, the membrane member and the press part may be individually provided in the second and third space parts.

Furthermore, the air lift device may further comprise an air supply part provided to supply air into the first to third space parts, and the air supply part may comprise a plurality of regulators for individually adjusting the flow rates of air supplied to the respective space parts.

In addition, the spray part may comprise a plurality of spray holes.

### Advantageous Effects

As described above, the air lift device related to one example of the present invention, and the drying device for manufacturing an electrode comprising the same have the following effects.

In a process of lifting a coated electrode by spraying air thereto, it is possible to differently set spray pressures of air for each region of the coated electrode in response to a coating pattern and a position of an uncoated portion of the coated electrode.

In addition, when lifting a coated electrode after performing a drying process, it is possible to prevent wrinkles from occurring in an uncoated portion in a travelling process by spraying air to the uncoated portion side of the coated electrode at a higher pressure than a coated portion.

### Description of Drawings

Figure 1 is a schematic diagram showing a drying device for manufacturing an electrode according to one example of the present invention.
Figure 2 is a configuration diagram of an air lift device related to one example of the present invention.
Figures 3 and 4 are schematic diagrams for explaining one operating state of the air lift device shown in Figure 2.

### Mode for Invention

Hereinafter, an air lift device according to one example of the present invention, and a drying device for manufacturing an electrode comprising the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

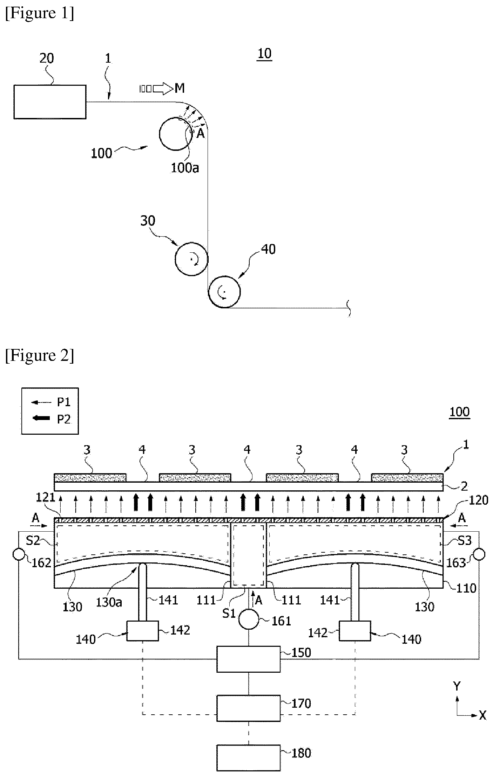

Figure 1 is a schematic diagram showing a drying device 10 for manufacturing an electrode according to one example of the present invention, and Figure 2 is a configuration diagram of an air lift device 100 related to one example of the present invention.

The drying device 10 for manufacturing an electrode comprises a drying part 20drying a coated electrode 1 that a coated portion 3 coated with an electrode slurry and an uncoated portion 4 uncoated with an electrode slurry are formed, and a transfer part 100, 30, 40 moving the coated electrode 1 passing through the drying part 20 in the travelling direction (M).

In addition, the transfer part comprises one or more rolls 30, 40 contacting an air lift device 100 provided to lift the coated electrode 1 while travelling using air (A), and the coated electrode 1, moving the coated electrode 1 along the travelling direction (M).

The drying part 20 may comprise a chamber, and a plurality of heating lamps provided inside the chamber. The chamber has an inlet through which the coated electrode 1 that the electrode slurry is applied on an electrode base material enters, and an outlet through which the coated electrode 1 after completing the drying process is discharged. The air lift device 100 is disposed on the outlet side of the drying part 20. As one example, in the drying device 10 for manufacturing an electrode, the drying part 20, the air lift device 100, and one or more travelling rolls 30, 40 may be sequentially arranged along the travelling direction of the coated electrode 1. In addition, the air lift device 100 may be disposed in a section where the travelling direction of the coated electrode 1 changes. Referring to Figure 1, for example, the air lift device 100 may be disposed in a section where the travelling direction is bent rather than a straight section of the travelling sections of the coated electrode 1.

In this document, the coated electrode 1 has an electrode base material 2, and a coating pattern in which a coated portion 3 coated with an electrode slurry and an uncoated portion 4 uncoated with an electrode slurry are sequentially arranged on the electrode base material 2. The coated portion 3 and the uncoated portion 4 may be alternately arranged sequentially along one direction (width direction, x-axis direction in Figure 2) of the coated electrode 1. The uncoated portion 4 may be positioned between two adjacent coated portions 3, and for example, the coated electrode 1 may have two to eight coated portions 3. In addition, the coated portion 3 may be formed on one side or both sides of the electrode base material 2.

The air lift device 100 according to one example of the present invention cannot only lift the dried coated electrode 1 by spraying air (A) on the surface of the coated electrode 1, but can also prevent wrinkles capable of occurring in the uncoated portion 4 uncoated with the electrode slurry in advance by promoting cooling of the coated electrode 1.

In addition, the air lift device 100 is an air-floating type device floating the coated electrode 1 without contacting the coated electrode 1.

In particular, the air lift device 100 increases the spray pressure (P2) of the air applied to the uncoated portion 4 of the coated electrode 1 higher than the spray pressure (P1) of the air applied to the coated portion 3, whereby it is possible to prevent wrinkles from occurring in the uncoated portion 4 during travelling and cooling processes.

Referring to Figure 2, the air lift device 100 comprises a main body 110, a membrane member 130, and a press part 140. In addition, the air lift device 100 may comprise an air supply part 150, and a control part 170 for controlling the press part 140 and the air supply part 150.

The air lift device 100 is an air floating device for lifting the coated electrode 1 having a coated portion 3 coated with an electrode slurry and an uncoated portion 4 uncoated with an electrode slurry while travelling.

The air lift device 100comprises a main body 110 including a space part (for example, S2) into which air (A) is introduced, and a spray part 120 through which the air (A) in the space part (S2) is sprayed to the outside toward the coated electrode 1. For example, the main body 110 may have a roll form. The main body 110 may have a roll shape extending in the width direction (x-axis direction) of the coated electrode 1. In addition, the main body 110 may have a plurality of space parts S1, S2, S3 partitioned through a partition wall 111. For example, as the plurality of partition walls 111 are disposed apart from each other within the main body 110 at a predetermined interval, a space part may be formed between the two partition walls 111.

The spray part 120 may comprise a plurality of spray holes 121. As one example, the spray part 120 may comprise a sheet made of porous carbon. The spray part 120 may be provided in a partial region 100a, also referred to as a spray region of the main body 110 along the travelling direction (M) of the coated electrode.

In addition, the air lift device 100 comprises a membrane member 130which is disposed in the main body 110 to face the space part (S2), and is extensible. The membrane member 130 may form a part of the boundary of the space part (S2), and change the shape of the space part (S2) when it is stretched. An end of the membrane member 114 may be bonded to the partition wall 111 defining the space part (S2) and disposed within the main body 110.

The membrane member 130 may be made of a material having elasticity such as rubber or silicone, and may be made of a material, which is changed by an external force and is restorable to its original state when the external force is removed.

The air lift device 100 comprises a press part 140 provided to differently set a spray pressure (P1) of the air sprayed toward the coated portion 3 and a spray pressure (P2) of the air sprayed toward the uncoated portion 4 through the spray part 120 in the space part (S2) by pressurizing a partial region of the membrane member (130).

In addition, the press part 140 may be provided to set a spray pressure (P2) of the air sprayed toward the uncoated portion 4 higher than a spray pressure (P1) of the air sprayed toward the coated portion 3.

As one example, the press part 140 may comprise a pressurizing member 141 contacting the membrane member 130 and disposed to extend the region 130a of the contacted membrane member 130toward the spray part 120, and a driving part 142 for moving the pressurizing member 141 within the main body 110 so that the contact position between the pressurizing member 141 and the membrane member 130 is adjusted. The driving part 142 may be composed of a pneumatic cylinder or a motor, and the like. The y-axis of Figure 2 represents the spray direction of the air (A) toward the coated electrode 1.

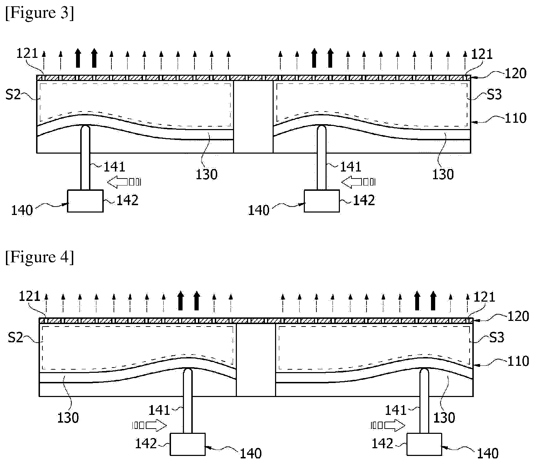

Figures 3 and 4 are schematic diagrams for explaining one operating state of the air lift device shown in Figure 2.

Referring to Figures 2 to 4, the pressurizing member 141 may be disposed to contact the region 130aof the membrane member 130 facing the uncoated portion 4 of the coated electrode (1), the membrane member (130) may be convexly extended toward the spray part 120 by the pressurizing member 141, and the region 130a where the membrane member 130 is convexly extended may have a spray pressure larger than that of the surrounding region. That is, by adjusting the position of the pressurizing member 141, it is possible to adjust the position of the region where the spray pressure of the air (A) discharged from the space part (S2) increases.

Also, the driving part 142 may be provided to move the pressurizing member 141along the direction (the width direction of the coated electrode, the x-axis direction) where the coated portion 3and the uncoated portion 4 of the coated electrode 1 are sequentially arranged. According to such a structure, in the process of lifting the coated electrode by spraying air thereto, it is possible to differently set spray pressures of air for each region of the coated electrode in response to a coating pattern and a position of an uncoated portion of the coated electrode. That is, when the position of the uncoated portion is changed or the coating pattern is changed according to the product standard, it is possible to provide a high spray pressure toward the uncoated portion at the changed position by moving the pressurizing member (141).

In addition, the air lift device 100 may comprise an air supply part 150 provided to supply air into the space part (S2), and the air supply part 150 may comprise a regulator 162 for adjusting the flow rate of air.

At this instance, air (e.g., compressed air) is continuously supplied to the space part (S2) in the main body 110 through the regulator, and the air in the space part (S2) is supplied toward the coated electrode 1 through the spray part 120, whereby the coated electrode 1 maintains a lifted state.

Also, an air filter for removing foreign substances in the air supplied to the space part (S2) may also be provided.

In addition, the main body 110 may have a plurality of space parts (S1, S2, S3) along the direction where the coated portion and the uncoated portion of the coated electrode are sequentially arranged. For example, the plurality of space parts may comprise a first space part (S1), and second and third space parts (S2, S3) located on both sides of the first space part (S1), respectively. The first to third space parts (S1, S2, S3) may be partitioned inside the main body 110 through the above-described partition wall 111.

At this instance, the membrane member 130 and the press part 140 may be individually provided in the second and third space parts (S2, S3).

That is, the second space part (S2) and the third space part (S3) each pressurize a partial region of the membrane member 130 through the press part 140, so that the spray pressures of air of different regions in the space parts (S2, S3) may be set differently.

Specifically, the second and third space parts (S2, S3) pressurize a partial region of the membrane member 130 through the press part 140, so that through the spray part 120 in the second and third space parts (S2, S3), the spray pressure of the air sprayed toward the coated portion 3 and the spray pressure of the air sprayed toward the uncoated portion 4 may be set differently.

In addition, the air lift device 100 may comprise an air supply part 150 provided to supply air into the first to third space parts (S1, S2, S3), and the air supply part 150 may comprise a plurality of regulators 161, 162, 163 for individually adjusting the flow rates of air supplied to the respective space parts (S1, S2, S3). In such a structure, the flow rates and pressures of air supplied to the respective space parts (S1, S2, S3) may be individually set.

Referring to Figure 2, for example, the coated electrode 1 may have four coated portions 3, and have three uncoated portions 4 along the width direction.

In the air lift device 100, the first space part (S1) may be disposed to face the uncoated portion 4 located in the width direction central portion of the coated electrode 1. At this instance, the second space part (S2) may be disposed to face two coated portions 3 and one uncoated portion 4 of the left region (based on Figure 2) in the width direction of the coated electrode 1. In addition, at this time, the third space part (S2) may be disposed to face two coated portions 3 and one uncoated portion 4 of the right region (based on Figure 2) in the width direction of the coated electrode 1.

At this instance, the flow rates and pressures of the air supplied to the respective space parts (S1, S2, S3) may be individually set, and by pressurizing a partial region of the membrane member 130 through the press part 140, it is possible to differently set a spray pressure (P1) of the air sprayed toward the coated portion 3 and a spray pressure (P2) of the air sprayed toward the uncoated portion 4 through the spray part 120 in the second and third space parts (S2, S3).

In addition, referring to Figures 3 and 4, by moving the pressurizing member 141 along the width direction of the coated electrode 1, it is possible to differently set spray pressures of air for each region of the coated electrode 1 in response to the position of the uncoated portion and the coating pattern.

According to Boyle's law, in which the pressure and volume of the gas are inversely proportional in a state where the temperature of the gas is constant, the spray pressure sprayed from the space part to the coated electrode may be adjusted differently. That is, by pressurizing the membrane member 130 to change the shape of the space part, the volume of the region facing the uncoated portion 4 may be reduced, and as a result, the pressure sprayed in the relevant region may be increased.

Also, the compressed air supplied into the space part may be within a range of 1 bar to 5 bar.

In addition, the control part 170 may also move the pressurizing member 141 according to the position of the uncoated portion 4 of the coated electrode 1 or the coating pattern, and may also adjust pressures in the respective space parts through the regulators 161, 162, 163.

The control part 170 may be connected to a separately provided sensing part 180, such as a vision camera or a sensor, disposed to photograph the coated electrode 1. The sensing part 180 may sense coating information of the coated electrode 1, and the coating information may comprise a position of an uncoated portion or a coating pattern. The control part 170 may set the position of the pressurizing member 141 based on sensing information received from the sensing part, such as the position of the uncoated portion 4 or the coating pattern, and may also adjust pressures in the respective space parts through the regulators 161, 162, 163.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

As described above, according to the air lift device related to one example of the present invention and the drying device for manufacturing an electrode comprising the same, when lifting a coated electrode after performing a drying process, it is possible to prevent wrinkles from occurring in an uncoated portion in a travelling process by spraying air to the uncoated portion side of the coated electrode at a higher pressure than a coated portion.

## Claims

1. An air lift device (100) for lifting a coated electrode (1) having a coated portion (3) coated with an electrode slurry and an uncoated portion (4) uncoated with an electrode slurry while travelling, comprising:
a main body (110) including a space part (S2) into which air is introduced, and a spray part (120) through which the air in the space part (S2) is sprayed to the outside toward the coated electrode;
a membrane member (130) which is disposed in the main body to face the space part (120), and is extensible;
a press part (140) provided to differently set a spray pressure (P1) of the air sprayed toward the coated portion (4) and a spray pressure (P2) of the air sprayed toward the uncoated portion through the spray part (120) in the space part by pressurizing a partial region of the membrane member (130);
the press part (140) comprising: a pressurizing member (141) contacting the membrane member (130) and disposed to extend the region (130a) of the contacted membrane member (130) toward the spray part (120); and
a driving part (142) for moving the pressurizing member (141) within the main body (110) so that the contact position between the pressurizing member (141) and the membrane member (130) is adjusted;
the driving part (142) being provided to move the pressurizing member (141) along the width direction of the coated electrode where the coated portion (3) and the uncoated portion (4) of the coated electrode (1) are sequentially arranged to differently set spray pressures of air for each region of the coated electrode.

2. The air lift device according to claim 1, wherein
the driving part is provided to move the pressurizing member (141) along the width direction of the coated electrode to set the spray pressure (P2) of the air sprayed toward the uncoated portion higher than the spray pressure (P1) of the air sprayed toward the coated portion.

3. The air lift device according to claim 1, wherein
the pressurizing member (141) is disposed to contact the region (130a) of the membrane member (130) facing the uncoated portion (4) of the coated electrode (1),
the membrane member (130) is convexly extended toward the spray part (120) by the pressurizing member (141), and the region (130a) where the membrane member is convexly extended has a spray pressure larger than that of the surrounding region.

4. The air lift device according to claim 1, further comprising
an air supply part (150) provided to supply air into the space part (S2), wherein
the air supply part (150) comprises a regulator (162) for adjusting a flow rate of air.

5. The air lift device according to claim 1, wherein
the main body (110) has a plurality of space parts (S1, S2, S3) along the width direction of the coated electrode (1) where the coated portion and the uncoated portion of the coated electrode are sequentially arranged,
the plurality of space parts comprises a first space part (S1), and second (S2) and third space (S3) parts located on both sides of the first space part (S1), respectively, and
the membrane member (130) and the press part (140) are individually provided in the second and third space parts.

6. The air lift device according to claim5, further comprising
an air supply part (150) provided to supply air into the first to third space parts (S1, S2, S3), wherein
the air supply part (150) comprises a plurality of regulators (161, 162, 163) for individually adjusting the flow rates of air supplied to the respective space parts.

7. The air lift device according to claim 1, wherein
the spray part (120) comprises a plurality of spray holes (121).

8. A drying device (10) for manufacturing an electrode, comprising:
a drying part (20) drying a coated electrode (1) that a coated portion (3) coated with an electrode slurry and an uncoated portion (4) uncoated with an electrode slurry are formed; and
a transfer part (100, 30, 40) moving the coated electrode (1) passing through the drying part (20) in the travelling direction (M), wherein
the transfer part comprises one or more travelling rolls (30, 40), contacting an air lift device (100) according to claim 1, provided to lift the coated electrode while travelling using air (A), and the coated electrode (1), and moving the coated electrode along the travelling direction (M).

9. The drying device for manufacturing an electrode according to claim 8, wherein
the air lift device (100) is disposed in a section where the travelling direction (M) of the coated electrode changes.

10. The drying device for manufacturing an electrode according to claim 9, wherein
the driving part (142) is provided to move the pressurizing member (141) along the width direction of the coated electrode (1) to set the spray pressure (P2) of the air sprayed toward the uncoated portion higher than the spray pressure (P1) of the air sprayed toward the coated portion.

11. The drying device for manufacturing an electrode according to claim 11, wherein
the pressurizing member (141) is disposed to contact the region of the membrane member (130) facing the uncoated portion (4) of the coated electrode (1),
the membrane member (130) is convexly extended toward the spray part (120) by the pressurizing member (141), and the region where the membrane member (130) is convexly extended has a spray pressure (P2) larger than that of the surrounding region.

## Patentansprüche

1. Lufthebevorrichtung (100) zum Anheben einer beschichteten Elektrode (1), welche einen beschichteten Abschnitt (3), welcher mit einer Elektrodenpaste beschichtet ist, und einen unbeschichteten Abschnitt (4) aufweist, welcher mit einer Elektrodenpaste unbeschichtet ist, während eines Bewegens, umfassend:
einen Hauptkörper (110), umfassend einen Abstandsteil (S2), in welchen Luft eingeleitet wird, und einen Sprühteil (120), durch welchen die Luft in dem Abstandsteil (S2) nach außen in Richtung der beschichteten Elektrode gesprüht wird;
ein Membranelement (130), welches in dem Hauptkörper angeordnet ist, um dem Abstandsteil (120) zugewandt zu sein, und streckbar ist;
einen Druckteil (140), welcher bereitgestellt ist, um einen Sprühdruck (P1) der Luft, welche in Richtung des beschichteten Abschnitts (4) gesprüht wird, und einen Sprühdruck (P2) der Luft, welche in Richtung des unbeschichteten Abschnitts durch den Sprühteil (120) in dem Abstandsteil gesprüht wird, durch ein mit Druck Beaufschlagen eines Teilbereichs des Membranelements (120) unterschiedlich festzulegen;
wobei der Druckteil (140) umfasst: ein Druckelement (141), welches das Membranelement (130) kontaktiert und angeordnet ist, um den Bereich (130a) des kontaktierten Membranelements (130) in Richtung des Sprühteils (120) auszudehnen; und
einen Antriebsteil (142) zum Bewegen des Druckelements (141) in dem Hauptkörper (110), so dass die Kontaktposition zwischen dem Druckelement (141) und dem Membranelement (130) angepasst wird;
wobei der Antriebsteil (142) bereitgestellt ist, um das Druckelement (141) entlang der Breitenrichtung der beschichteten Elektrode (1) zu bewegen, in welcher der beschichtete Abschnitt (3) und der unbeschichtete Abschnitt (4) der beschichteten Elektrode sequenziell angeordnet sind, um Sprühdrücke von Luft für jeden Bereich der beschichteten Elektrode unterschiedlich festzulegen.

2. Lufthebevorrichtung nach Anspruch 1, wobei
der Antriebsteil bereitgestellt ist, um das Druckelement (141) entlang der Breitenrichtung der beschichteten Elektrode zu bewegen, um den Sprühdruck (P2) der Luft, welche in Richtung des unbeschichteten Abschnitts gesprüht wird, höher festzulegen als den Sprühdruck (P1) der Luft, welche in Richtung des beschichteten Abschnitts gesprüht wird.

3. Lufthebevorrichtung nach Anspruch 1, wobei
das Druckelement (141) angeordnet ist, um den Bereich (130a) des Membranelements (130) zu kontaktieren, welcher dem unbeschichteten Abschnitt (4) der beschichteten Elektrode (1) zugewandt ist,
sich das Membranelement (130) konvex in Richtung des Sprühteils (120) durch das Druckelement erstreckt und der Bereich (130a), in welchem sich das Membranelement konvex erstreckt, einen Sprühdruck aufweist, welcher größer als derjenige des umgebenden Bereichs ist.

4. Lufthebevorrichtung nach Anspruch 1, ferner umfassend
einen Luftzuführteil (150), welcher bereitgestellt ist, um Luft in den Abstandsteil (S2) zuzuführen, wobei
der Luftzuführteil (150) einen Regulator (162) zum Anpassen einer Strömungsrate von Luft umfasst.

5. Lufthebevorrichtung nach Anspruch 1, wobei
der Hauptkörper (110) eine Mehrzahl Abstandsteilen (S1, S2, S3) entlang der Breitenrichtung der beschichteten Elektrode (1) aufweist, in welcher der beschichtete Abschnitt und der unbeschichtete Abschnitt der beschichteten Elektrode sequenziell angeordnet sind,
die Mehrzahl von Abstandsteilen einen ersten Abstandsteil (S1), und zweite (S2) und dritte Abstands- (S3) Teile umfasst, welche sich jeweils an beiden Seiten des ersten Abstandsteils (S1) befinden, und
das Membranelement (130) und der Druckteil (140) individuell in den zweiten und dritten Abstandsteilen bereitgestellt sind.

6. Lufthebevorrichtung nach Anspruch 5, ferner umfassend
einen Luftzuführteil (150), welcher bereitgestellt ist, um Luft in die ersten bis dritten Abstandsteile (S1, S2, S3) zuzuführen, wobei
der Luftzuführteil (150) eine Mehrzahl von Regulatoren (161, 162, 163) zum individuellen Anpassen der Strömungsraten von Luft, welche den jeweiligen Abstandsteilen zugeführt werden.

7. Lufthebevorrichtung nach Anspruch 1, wobei
der Sprühteil (120) eine Mehrzahl von Sprühlöchern (121) umfasst.

8. Trocknungsvorrichtung (10) zum Herstellen einer Elektrode, umfassend:
einen Trocknungsteil (20), welcher eine beschichtete Elektrode (1) trocknet, sodass ein beschichteter Abschnitt (3), welcher mit einer Elektrodenpaste beschichtet ist, und ein unbeschichteter Abschnitt (4), welcher mit einer Elektrodenpaste unbeschichtet ist, gebildet werden; und
einen Übertragungsteil (100, 30, 40), welcher in der Fortbewegungsrichtung (M) die beschichtete Elektrode (1), welche durch den Trocknungsteil (20) tritt, bewegt, wobei
der Übertragungsteil eine oder mehrere Fortbewegungsrollen (30, 40) umfasst, welche eine Lufthebevorrichtung (100) nach Anspruch 1, welche bereitgestellt ist, um die beschichtete Elektrode während eines Fortbewegens unter Verwendung von Luft (A) anzuheben, und die beschichtete Elektrode (1) kontaktieren und die beschichte Elektrode entlang der Fortbewegungsrichtung (M) bewegen.

9. Trocknungsvorrichtung zum Herstellen einer Elektrode nach Anspruch 8, wobei
die Lufthebevorrichtung (100) in einem Abschnitt angeordnet ist, in welchem sich die Fortbewegungsrichtung (M) der beschichteten Elektrode ändert.

10. Trocknungsvorrichtung zum Herstellen einer Elektrode nach Anspruch 9, wobei
der Antriebsteil (142) bereitgestellt ist, um das Druckelement (141) entlang der Breitenrichtung der beschichteten Elektrode (1) zu bewegen, um den Sprühdruck (P2) der Luft, welche in Richtung des unbeschichteten Abschnitts gesprüht wird, höher festzulegen als den Sprühdruck (P1) der Luft, welche in Richtung des beschichteten Abschnitts gesprüht wird.

11. Trocknungsvorrichtung zum Herstellen einer Elektrode nach Anspruch 11, wobei
das Druckelement (141) angeordnet ist, um den Bereich des Membranelements (130) zu kontaktieren, welcher dem unbeschichteten Abschnitt (4) der beschichteten Elektrode (1) zugewandt ist,
sich das Membranelement (130) konvex in Richtung des Sprühteils (120) durch das Druckelement (141) erstreckt und der Bereich, in welchem sich das Membranelement (130) konvex erstreckt, einen Sprühdruck (P2) aufweist, welcher größer als derjenige des umgebenden Bereichs ist.

## Revendications

1. Dispositif à coussin d'air (100) pour soulever une électrode enrobée (1) présentant une partie enrobée (3) enrobée d'une pâte d'électrode et une partie non enrobée (4) non enrobée d'une pâte d'électrode pendant le déplacement, comprenant :
un corps principal (110) incluant une partie creuse (S2) dans laquelle de l'air est introduit, et une partie de pulvérisation (120) par laquelle l'air dans la partie creuse (S2) est pulvérisé vers l'extérieur en direction de l'électrode enrobée ;
un organe à membrane (130) qui est disposé dans le corps principal pour faire face à la partie creuse (120) et qui est extensible ;
une partie de compression (140) destinée à définir différemment une pression de pulvérisation (P1) de l'air pulvérisé vers la partie enrobée (4) et une pression de pulvérisation (P2) de l'air pulvérisé vers la partie non enrobée à travers la partie de pulvérisation (120) dans la partie creuse en pressurisant une région partielle de l'organe à membrane (130) ;
la partie de compression (140) comprenant : un organe de pressurisation (141) en contact avec l'organe à membrane (130) et disposé pour prolonger la région (130a) de l'organe à membrane (130) en contact vers la partie de pulvérisation (120) ; et
une partie d'entraînement (142) pour déplacer l'organe de pressurisation (141) à l'intérieur du corps principal (110) afin d'ajuster la position de contact entre l'organe de pressurisation (141) et l'organe à membrane (130) ;
la partie d'entraînement (142) étant conçue pour déplacer l'organe de pressurisation (141) dans le sens de la largeur de l'électrode enrobée (1),
la partie enrobée (3) et la partie non enrobée (4) de l'électrode enrobée (1) étant agencées séquentiellement pour définir différemment les pressions de pulvérisation d'air pour chaque région de l'électrode enrobée.

2. Dispositif à coussin d'air selon la revendication 1, dans lequel
la partie d'entraînement est conçue pour déplacer l'organe de pressurisation (141) le long du sens de la largeur de l'électrode enrobée afin de définir la pression de pulvérisation (P2) de l'air pulvérisé vers la partie non enrobée pour qu'elle soit supérieure à la pression de pulvérisation (P1) de l'air pulvérisé vers la partie enrobée.

3. Dispositif à coussin d'air selon la revendication 1, dans lequel
l'organe de pressurisation (141) est disposé pour entrer en contact avec la région (130a) de l'organe à membrane (130) faisant face à la partie non enrobée (4) de l'électrode enrobée (1),
l'organe à membrane (130) est étendu de manière convexe vers la partie de pulvérisation (120) par l'organe de pressurisation (141), et la région (130a) où l'organe à membrane est étendu de manière convexe présente une plus grande pression de pulvérisation que celle de la région environnante.

4. Dispositif à coussin d'air selon la revendication 1, comprenant en outre
une partie d'alimentation en air (150) destinée à fournir de l'air dans la partie creuse (S2), dans lequel
la partie d'alimentation en air (150) comprend un régulateur (162) pour ajuster le débit d'air.

5. Dispositif à coussin d'air selon la revendication 1, dans lequel
le corps principal (110) présente une pluralité de parties creuses (S1, S2, S3) le long du sens de la largeur de l'électrode enrobée (1), la partie enrobée et la partie non enrobée de l'électrode enrobée étant agencées séquentiellement,
la pluralité de parties creuses comprennent une première partie creuse (S1), ainsi qu'une deuxième partie creuse (S2) et une troisième partie creuse (S3) situées de part et d'autre de la première partie creuse (S1), respectivement, et
l'organe à membrane (130) et la partie de compression (140) sont disposés individuellement dans les deuxième et troisième parties creuses.

6. Dispositif à coussin d'air selon la revendication 5, comprenant en outre
une partie d'alimentation en air (150) destinée à fournir de l'air dans les première à troisième parties creuses (S1, S2, S3), dans lequel
la partie d'alimentation en air (150) comprend une pluralité de régulateurs (161, 162, 163) destinés à régler individuellement les débits d'air fournis aux parties creuses respectives.

7. Dispositif à coussin d'air selon la revendication 1, dans lequel
la partie de pulvérisation (120) comprend une pluralité d'orifices de pulvérisation (121).

8. Dispositif de séchage (10) pour fabriquer une électrode, comprenant :
une partie de séchage (20) séchant une électrode enrobée (1) pour laquelle sont formées une partie enrobée (3) enrobée d'une pâte d'électrode et une partie non enrobée (4) non enrobée d'une pâte d'électrode ; et
une partie de transfert (100, 30, 40) déplaçant l'électrode enrobée (1) passant à travers la partie de séchage (20) dans la direction de déplacement (M), dans lequel
la partie de transfert comprend un ou plusieurs rouleaux de déplacement (30, 40), en contact avec un dispositif à coussin d'air (100) selon la revendication 1, destiné à soulever l'électrode enrobée pendant le déplacement en utilisant de l'air (A), et l'électrode enrobée (1), et déplaçant l'électrode enrobée le long de la direction de déplacement (M).

9. Dispositif de séchage pour fabriquer une électrode selon la revendication 8, dans lequel
le dispositif à coussin d'air (100) est disposé dans une section où la direction de déplacement (M) de l'électrode enrobée change.

10. Dispositif de séchage pour fabriquer une électrode selon la revendication 9, dans lequel
la partie d'entraînement (142) est destinée à déplacer l'organe de pressurisation (141) le long du sens de la largeur de l'électrode enrobée (1) afin de régler la pression de pulvérisation (P2) de l'air pulvérisé vers la partie non enrobée pour qu'elle soit supérieure à la pression de pulvérisation (P1) de l'air pulvérisé vers la partie enrobée.

11. Dispositif de séchage pour fabriquer une électrode selon la revendication 11, dans lequel
l'organe de pressurisation (141) est disposé pour entrer en contact avec la région de l'organe à membrane (130) faisant face à la partie non enrobée (4) de l'électrode enrobée (1),
l'organe à membrane (130) est étendu de manière convexe vers la partie de pulvérisation (120) par l'organe de pressurisation (141), et la région où l'organe à membrane (130) est étendu de manière convexe présente une plus grande pression de pulvérisation (P2) que celle de la région environnante.
